# EUROPÄISCHE PATENTANMELDUNG

(11) **EP 1 803 881 A2**
(43) Veröffentlichungstag der Anmeldung: **04.07.2007**
(21) Anmeldenummer: 06021964.9
(22) Anmeldetag: 19.10.2006
(51) Int. Cl.: E05F 15/10, E05F 15/16, H02K 7/10

(54) **Torantrieb**

(30) Priorität: 28.12.2005 DE 202005020342 U; 30.06.2006 DE 202006010188 U
(71) Anmelder: Marantec Antriebs- und Steuerungstechnik GmbH & Co. KG., 33428 Marienfeld (DE)
(72) Erfinder: Hörmann, Michael, 33790 Halle (DE)
(74) Vertreter: Thoma, Michael

(57) **Zusammenfassung**

Die vorliegende Erfindung betrifft einen Torantrieb für ein Garagen-, Garten-, Hallen- oder Industrietor, mit einer Motoreinheit (2), die einen Antriebsmotor (3) und eine Motorabtriebswelle (4) umfasst, einem Abtriebsgetriebe (8), das eingangsseitig mit der Motorabtriebswelle (4) verbindbar ist und ausgangsseitig eine Getriebeausgangswelle (18) zum Antreiben eines Torbewegungselements, insbesondere einer Torwelle, aufweist, einer Entriegelungskupplung (20) zum Entriegeln der Motorabtriebswelle (4) gegenüber dem Torbewegungselement, sowie zumindest einem Dämpfungselement (30,31,40) zur Dämpfung von Antriebsstößen. Erfindungsgemäß zeichnet sich der Torantrieb dadurch aus, dass das Abtriebsgetriebe (8) ein von der Motoreinheit (2) separat ausgebildetes Getriebegehäuse (11) aufweist und mit der Entriegelungskupplung (20) und dem Dämpfungselement (30,31) zusammen modulartig einen separaten Antriebsaufsatz bildet, der einerseits an die Motoreinheit (2) und andererseits an das Torbewegungselement anschließbar ist.

## Beschreibung

Die vorliegende Erfindung betrifft einen Torantrieb für ein Garagen-, Garten-, Hallen- oder Industrietor, mit einer Motoreinheit, die einen Antriebsmotor und eine Motorabtriebswelle umfasst, einem Abtriebsgetriebe, das eingangsseitig mit der Motorabtriebswelle verbindbar ist und ausgangsseitig eine Getriebeausgangswelle zum Antreiben eines Torbewegungselements, insbesondere einer Torwelle, aufweist, einer Entriegelungskupplung zum Entriegeln der Motorabtriebswelle gegenüber dem Torbewegungselement sowie einem Dämpfungselement zur Dämpfung von Antriebsstößen.

Zum Antrieb von Toren wie Garagentoren, Gartentoren, Hallentoren oder auch großen Industrietoren werden regelmäßig Elektromotoren eingesetzt, die über ein Ausgangsgetriebe ein Torbewegungselement, meist eine Torwelle, antreiben, um beispielsweise ein Torseil oder eine Torkette aufzuwickeln, an der das Tor befestigt ist. Es versteht sich, dass andere Torbewegungselemente dabei Verwendung finden können. Genauer gesagt sind dabei eigentlich zwei Getriebe zwischen dem eigentlichen Antriebsmotor und dem Torbewegungselement vorgesehen. Zunächst wird die regelmäßig sehr hohe Drehzahl des Elektromotors beispielsweise über eine Schneckengetriebestufe auf die Drehzahl der Motorabtriebswelle reduziert. Diese erste Getriebestufe ist jedoch sozusagen Teil der Motoreinheit und oftmals Teil des zugekauften Elektromotors bzw. der Motoreinheit. Um die Drehzahl der Motorabtriebswelle an die Erfordernisse des Torantriebes anzupassen, wird zudem eine weitere Getriebestufe verwendet, die auf der Motorabtriebswelle sitzt und mit der Getriebeausgangswelle das Torbewegungselement antreibt.

Für dieses Abtriebsgetriebe ist üblicherweise an der Motoreinheit ein Getriebegehäuse vorgesehen, in dem die Getriebeelemente, zumeist eine Stirnradstufe, angeordnet werden und an dem auch die Getriebeabtriebswelle gelagert wird.

Hierbei kommt es jedoch aufgrund der Maßtoleranzen vieler Einzelteile oft zu Ungenauigkeiten im Getriebe. Eine Dämpfung und eine Entriegelung werden zusätzlich an verschiedenen Stellen angebracht, so dass insgesamt lange Toleranzketten entstehen. Zudem muss die Motoreinheit eigens für den jeweiligen Anwendungsfall angepasst werden.

Der vorliegenden Erfindung liegt hiervon ausgehend die Aufgabe zugrunde, einen verbesserten Torantrieb der genannten Art zu schaffen, der Nachteile des Standes der Technik vermeidet und letzteren in vorteilhafter Weise weiterbildet. Insbesondere soll mit einfachen Mitteln eine Anpassung des Antriebsmotors an das anzutreibende Tor ermöglicht und lange Toleranzketten hierbei im Abtriebsgetriebe vermieden werden.

Erfindungsgemäß wird diese Aufgabe durch einen Torantrieb gemäß Anspruch 1 gelöst. Bevorzugte Ausgestaltungen der Erfindung sind Gegenstand der abhängigen Ansprüche.

Es wird also vorgeschlagen, das Abtriebsgetriebe nicht länger in die Motoreinheit bzw. das Gehäuse der Motoreinheit zu integrieren. Erfindungsgemäß ist vielmehr vorgesehen, dass das Abtriebsgetriebe ein von der Motoreinheit separat ausgebildetes Getriebegehäuse aufweist und mit der Entriegelungskupplung und dem Dämpfungselement zusammen modulartig einen eigenständigen Antriebsaufsatz bildet, der einerseits an die Motoreinheit und deren Motorabtriebswelle und andererseits an das Torbewegungselement anschließbar ist. Für den Torantrieb wird damit ein modulartiger Aufbau vorgeschlagen. Mit dem separaten Antriebsaufsatz wird sozusagen die Lücke im Antriebsstrang zwischen dem Antriebsmotor und dem Torbewegungselement geschlossen. An dem Antriebsaufsatz kann einerseits die für das jeweilige Tor passende Motoreinheit an- bzw. aufgesetzt werden, wozu der Antriebsaufsatz an die jeweilige Motoreinheit angepasste Anschlussmittel besitzt. Andererseits weist der Antriebsaufsatz an das jeweilige Torbewegungselement anpassbare Anschlussmittel auf, um an das jeweilige Torbewegungselement angeschlossen werden zu können. Durch Ausbildung des Abtriebsgetriebes als separater Antriebsaufsatz wird eine lange Toleranzkette vermieden. Zudem kann durch die Integration der Entriegelungskupplung und des Dämpfungselementes in diesen Antriebsaufsatz sozusagen ein komplettes Paket bereitgestellt werden, das die notwendigen Anforderungen an einen Torantrieb, wie Entriegelung und Dämpfung von Antriebsstößen, unabhängig von der Ausbildung der Motoreinheit realisiert.

In Weiterbildung der Erfindung können in den separaten Antriebsaufsatz weitere Funktionskomponenten des Torantriebs integriert sein. Insbesondere ist in Weiterbildung der Erfindung eine Wegerfassungseinrichtung, vorzugsweise eine Impulsscheibe, zur Erfassung der Torstellung in den Antriebsaufsatz integriert, insbesondere im Inneren des Getriebegehäuses aufgenommen. Die Wegerfassungseinrichtung ist dabei vorteilhafterweise ausgangsseitig von der Entriegelungskupplung angeordnet, wobei bei Ausbildung der Wegerfassungseinrichtung mit einer Impulsscheibe letztere unmittelbar auf der Getriebeausgangswelle sitzen kann. Der zugehörige Impulsleser ist dabei vorteilhafterweise ebenfalls im Inneren des Getriebegehäuses angeordnet.

Alternativ oder zusätzlich kann auch eine Entriegelungserfassungseinrichtung zur Erfassung der Entriegelungsstellung der Entriegelungskupplung in den separaten Antriebsaufsatz integriert sein, so dass auch die Funktion der Entriegelungsüberwachung von dem Antriebsaufsatz verwirklicht wird. Die Entriegelungserfassungseinrichtung kann dabei einen Endschalter besitzen, welcher die Entriegelungsstellung der Entriegelungskupplung erfasst und darüber hinaus eine Abschaltung der Energieversorgung der Motoreinheit bewirken kann, wenn die Entriegelung der Entriegelungskupplung erfasst wird. Der Endschalter kann dabei an dem Getriebegehäuse befestigt sein und eine Betätigung eines Entriegelungshebels überwachen, der die Entriegelungskupplung betätigt und ebenfalls am Getriebegehäuse gelagert sein kann.

Um den jeweils passenden Antriebsmotor in geeigneter Ausrichtung anschließen zu können, sind in Weiterbildung der Erfindung an dem Antriebsaufsatz motoranschlussseitig verschiedene und/oder variable Anschlussmittel für die Motoreinheit vorgesehen, so dass verschiedene Motoreinheiten und/oder dieselbe Motoreinheit in verschiedenen Ausrichtungen relativ zu dem Antriebsaufsatz an diesem befestigt werden können. Beispielsweise können die Anschlussmittel mehrere Bohrungssätze umfassen, durch die hindurch der Antriebsaufsatz an der jeweiligen Motoreinheit festgeschraubt werden kann. Insbesondere sind die Anschlussmittel dabei an dem Getriebegehäuse vorgesehen, um dieses an der Motoreinheit festzuschrauben.

Alternativ oder zusätzlich kann der Antriebsaufsatz auch abtriebsseitig verschiedene und/oder variable Anschlussmittel zum Anschluss verschiedener Torbewegungselemente und/oder desselben Torbewegungselements in verschiedenen Ausrichtungen aufweisen.

In besonders vorteilhafter Weise können die motorseitigen Anschlussmittel des Antriebsaufsatzes eine Schnellverriegelungsvorrichtung umfassen, mittels derer der Antriebsaufsatz an der Motoreinheit schnellverriegelt werden kann. Die Schnellverriegelungsvorrichtung kann dabei nach einer Ausführung der Erfindung werkzeugfrei betätigbar ausgebildet sein. Insbesondere kann zwischen der Motoreinheit und dem Antriebsaufsatz ein Bajonettverschluss vorgesehen sein, mittels dessen der Antriebsaufsatz besonders rasch an der Motoreinheit befestigt werden kann. Die Schnellverriegelungsvorrichtung zeichnet sich hierbei dadurch aus, dass motorseitige Eingriffsmittel und daran angepasste, am Antriebsaufsatz vorgesehene Eingriffsmittel durch Kombination einer Axialbewegung und einer Drehbewegung in formschlüssigen Verriegelungseingriff bringbar sind. Nach einer vorteilhaften Ausführung der Erfindung können um die Motorabtriebswelle oder eine dazu parallele Drehachse drehbar gelagerte Eingriffsklauen vorgesehen sein, die mit hierzu komplementär ausgebildeten Eingriffsausnehmungen in Eingriff bringbar sind.

Das Getriebegehäuse kann grundsätzlich verschieden ausgebildet sein. Nach einer bevorzugten Ausführung der Erfindung besteht es aus zwei Halbschalen, die aufeinandersetzbar sind und von denen die eine die Anschlussmittel zum Anschließen der Motoreinheit und die andere Lagermittel zur Abstützung des Getriebegehäuses gegenüber den Antriebskräften bzw. -momenten aufweist.

Vorteilhafterweise können in dem Getriebegehäuse des Antriebsaufsatzes verschiedene Getriebestufen eingesetzt werden, um verschiedene Übersetzungs- und/oder Untersetzungsverhältnisse zwischen der Motorabtriebswelle und der Getriebeausgangswelle zu realisieren. Durch eine solche auswechselbare Getriebestufe kann die von der Motorabtriebswelle bereitgestellte Drehzahl an die Erfordernisse des jeweiligen Tores angepasst werden, ohne dass jedes Mal ein gänzlich anderer Antriebsaufsatz bereitgehalten werden müsste.

Insbesondere kann die auswechselbare Getriebestufe ein Stirnradpaar besitzen, das ein kleineres und ein größeres Stirnrad umfasst. Hierzu kann das von der Getriebestufe bereitgestellte Übersetzungs- bzw. Untersetzungsverhältnis einfach dadurch geändert werden, dass die beiden Stirnräder miteinander vertauscht werden, was bei gleich bleibendem Achsabstand möglich ist. Alternativ oder zusätzlich können auch andere Stirnradpaare in das Getriebegehäuse eingesetzt werden, um gänzlich andere oder weitere Variationen des Übersetzungs- bzw. Untersetzungsverhältnisses zu erreichen.

Die Getriebestufe kann in dem Getriebegehäuse grundsätzlich auf verschiedene Art und Weise gelagert werden. Nach einer vorteilhaften Ausführung der Erfindung sind sämtliche Getrieberäder der Getriebestufe an derselben Getriebegehäuseschale abgestützt. Hierdurch kann eine präzise Lagerung erreicht werden, die von Anschlusstoleranzen verschiedener Gehäuseteile nicht beeinflusst wird.

Das Dämpfungselement zum Abfangen von Antriebsstößen kann in verschiedener Weise in den Antriebsaufsatz integriert sein. Nach einer bevorzugten Ausführung der Erfindung ist das Dämpfungselement an einem Dämpfungselementeträger angeordnet, der lösbar mit dem Getriebegehäuse verbunden, vorzugsweise außenseitig an dem Getriebegehäuse befestigt ist. Der Dämpfungselementeträger kann dabei vorzugsweise aus einem Dämpfungsblech bestehen, das stirnseitig im Bereich des Austritts der Getriebeausgangswelle an dem Getriebegehäuse lösbar befestigt, insbesondere angeschraubt ist, und eine von der Getriebeausgangswelle radial beabstandete Dämpfungselementeaufnahme besitzt. Das Dämpfungselement kann beispielsweise an einem Torgestell oder einem anderen gegenüber dem Torbewegungselement abgestützten Bauteil angelenkt sein, so dass von den Antriebskräften und -momenten induzierte Antriebsstöße abgefangen werden können. Vorteilhafterweise ist dabei das Dämpfungsblech an mehreren Punkten um den Austritt der Getriebeausgangswelle herum am Getriebegehäuse festgeschraubt, so dass die Antriebsstöße zentral abgefangen werden. Vorzugsweise besitzt dabei der Dämpfungselementeträger und/oder das Getriebegehäuse mehrere und/oder variable Anschlussmittel, um einen Anschluss des Dämpfungselementeträgers an das Getriebegehäuse in unterschiedlichen Stellungen zu ermöglichen. Der Dämpfungselementeträger kann insbesondere in verschiedenen Stellungen an dem Getriebegehäuse festgeschraubt werden, beispielsweise jeweils um einen vorgegebenen Winkelversatz verdreht, um die Befestigung in günstigster Weise zu ermöglichen.

Alternativ oder zusätzlich zu einem solchen Dämpfungselement kann auch ein Dämpfungselement zwischen dem Antriebsaufsatz und der Motoreinheit vorgesehen sein, wobei dieses Dämpfungselement vorteilhafterweise Dämpfungsmittel aufweist, welche bezüglich der Motorabtriebswelle radial wirksam und/oder in Umfangsrichtung um die Motorabtriebswelle wirksam sind. Nach einer vorteilhaften Ausführung der Erfindung kann das Dämpfungselement eine ringförmige Dämpfungsscheibe bilden, die zwischen der Motoreinheit und dem darauf aufgesetzten Antriebsaufsatz sitzt und mit beiden genannten Bauteilen in vorzugsweise formschlüssigen Eingriff sitzt. Die ringförmige Dämpfungsscheibe kann dabei axiale und/oder radiale Eingriffsvorsprünge und/oder -ausnehmungen besitzen, mittels derer sie in formschlüssigen Eingriff mit der Motoreinheit und dem Antriebsaufsatz bzw. jeweils damit verbundenen zwischengeschalteten Bauelementen steht.

Insbesondere kann das Dämpfungselement derart ausgebildet und/oder angeordnet sein, dass es durch die vorgenannte Schnellverriegelungsvorrichtung zwischen dem Antriebsaufsatz und der Motoreinheit befestigbar ist. Das Dämpfungselement ist sozusagen in die Schnellverriegelungsvorrichtung integriert.

Um eine kleinbauende Anordnung zu erreichen, ist die Entriegelungskupplung zumindest mit ihren Verriegelungs- bzw. Entriegelungselementen im Inneren des Getriebegehäuses angeordnet. Insbesondere kann die Entriegelungskupplung zwischen der Getriebeausgangswelle und einem der Getrieberäder der Getriebestufe angeordnet sein, welches auf der genannten Getriebeausgangswelle sitzt bzw. damit verbunden ist. Die Entriegelungskupplung kann dabei einen in der Getriebeausgangswelle zumindest teilweise verschieblich aufgenommenen Betätigungsstift aufweisen, der von einem auf der Getriebegehäuseaußenseite angeordneten Betätiger betätigbar ist. Der genannte Betätigungsstift kann dabei eine Passfeder betätigen, welche axial verschieblich an der Getriebeausgangswelle gelagert ist und je nach axialer Stellung das auf der Getriebeausgangswelle sitzende Getrieberad mit dieser verriegelt oder gegenüber dieser freigibt.

In Weiterbildung der Erfindung ist die in dem Antriebsaufsatz vorgesehene Getriebestufe nicht die einzige Getriebestufe des gesamten Torantriebs. Insbesondere kann die Motoreinheit selbst auch die an sich übliche Getriebestufe zur Reduktion der Drehzahl des Elektromotors auf die Drehzahl der Motorabtriebswelle aufweisen. Beispielsweise kann zwischen der Elektromotorwelle und der Motorabtriebswelle eine Schneckengetriebestufe oder auch eine Kegelstirnradgetriebestufe zwischengeschaltet sein, die jedoch fester Bestandteil der Motoreinheit ist und im Inneren des Motorgehäuses aufgenommen ist.

Die Erfindung wird nachfolgend anhand bevorzugter Ausführungsbeispiele und zugehöriger Zeichnungen näher erläutert. In den Zeichnungen zeigen:
- Fig. 1:: eine perspektivische Explosionsdarstellung eines Torantriebs mit einem Getriebeaufsatz nach einer bevorzugten Ausführung der Erfindung, und
- Fig. 2:: eine perspektivische Explosionsdarstellung eines Torantriebs mit einem Getriebeaufsatz nach einer weiteren bevorzugten Ausführung der Erfindung.

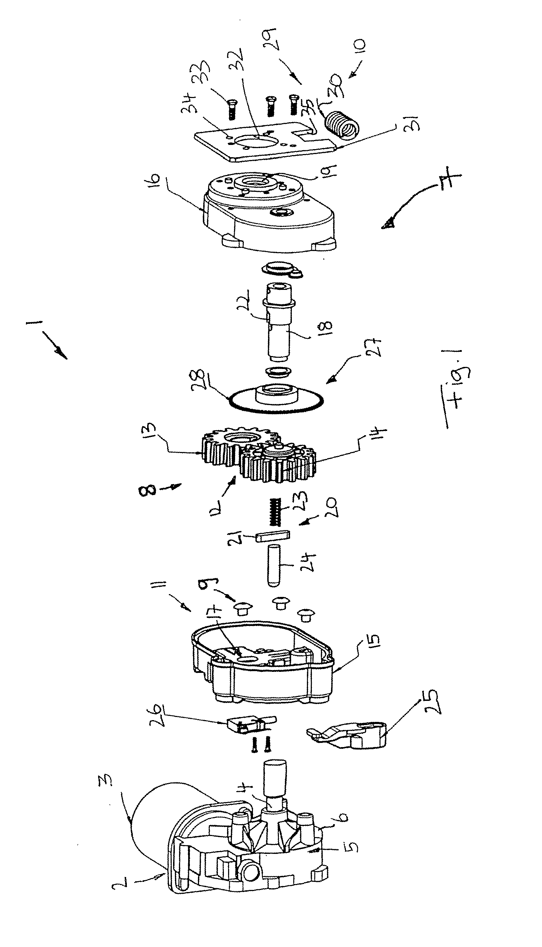

Der in Figur 1 gezeigte Torantrieb 1 umfasst eine Motoreinheit 2 mit einem Elektromotor 3 sowie einer Motorabtriebswelle 4, die sich in der gezeichneten Ausführung quer zur Längsachse des Elektromotors 3 erstreckt. Als Elektromotor 3 können verschiedene Motortypen Verwendung finden. Die Motorabtriebswelle 4 ist dabei vorteilhafterweise über ein Getriebe 5 mit der Motorwelle des Elektromotors 3 gekoppelt, um die üblicherweise recht hohe Drehzahl des Elektromotors 3 in eine verhältnismäßig niedrigere Drehzahl der Motorabtriebswelle 4 umzusetzen. Das Getriebe 5 ist dabei in dem Gehäuse 6 der Motoreinheit 2 untergebracht und kann grundsätzlich verschieden ausgebildet sein. Insbesondere kann ein Schneckengetriebe oder ein Kegelstirnradgetriebe vorgesehen sein, um die Drehzahluntersetzung in der gewünschten Weise zu realisieren. Das genannte Getriebe 5 ist dabei Teil der Motoreinheit 2.

Auf die Motorabtriebswelle 4 der Motoreinheit 2 kann ein Antriebsaufsatz 7 aufgesetzt werden, der ein Abtriebsgetriebe 8 und weitere Torantriebs-Funktionskomponenten beinhaltet. Über diesen Getriebeaufsatz kann nochmals eine erforderliche Anpassung der Drehzahl der Motorabtriebswelle 4 an die gewünschte Drehzahl beispielsweise einer Torwelle realisiert werden, beispielsweise um die Motoreinheit 2 für verschiedene Tore verwenden zu können. Der Antriebsaufsatz 7 bildet dabei einen selbständigen Funktionsblock, der sozusagen zwischen die Motoreinheit 2 und das zu bewegende Torbewegungselement, welches in der Zeichnung nicht eigens dargestellt ist, geschaltet werden kann und den Teil des Antriebsstranges zwischen Motoreinheit 2 und Torbewegungselement bildet. Durch diesen eine abgeschlossene Funktionseinheit bildenden Antriebsaufsatz 7 erhält der Torantrieb 1 einen modularen Aufbau, der es erlaubt, den Torantrieb 1 baukastenmäßig zusammenzubauen und an die Erfordernisse des jeweiligen Einsatzes anzupassen. Der Antriebsaufsatz 7 umfasst dabei eine motorseitige Schnittstelle, um mit verschiedenen Motoreinheiten verbunden werden zu können, und andererseits eine abtriebsseitige Schnittstelle zur Verbindung des Antriebsaufsatzes 7 mit dem jeweiligen Torbewegungselement. Die genannten Schnittstellen umfassen dabei geeignete Anschlussmittel 9 und 10, um den Antriebsaufsatz 7 drehmomentübertragend an die Motoreinheit 2 bzw. das Torbewegungselement anschließen zu können. In der gezeichneten Ausführung ist motorseitig als Anschlussmittel 9 eine Schraubverbindung vorgesehen, mittels derer das Gehäuse 11 des Antriebsaufsatzes 7 an dem Gehäuse 6 der Motoreinheit 2 lösbar befestigt werden kann.

Wie Figur 1 zeigt, umfasst der Antriebsaufsatz 7 ein Abtriebsgetriebe 8, das in der gezeichneten Ausführung als Stirnradgetriebe mit zwei Stirnzahnrädern 13 und 14 ausgebildet ist. Das Abtriebsgetriebe 8 ist dabei in dem Getriebegehäuse 11 des Antriebsaufsatzes 7 angeordnet. Das genannte Getriebegehäuse 11 ist in der gezeichneten Ausführung zweischalig ausgebildet. Eine Gehäuseunterschale 15 ist in der genannten Weise an der Motoreinheit 2 befestigbar und kann durch eine Gehäuseoberschale 16 verschlossen werden.

Die Gehäuseunterschale 15 umfasst dabei geeignete Lagermittel 17 zur Lagerung der Getriebeelemente des Abtriebsgetriebes 8. Es versteht sich, dass auch die Gehäuseoberschale 16 entsprechende Lagermittel aufweisen kann, um die Stirnzahnräder 13 und 14 zu lagern.

Die in der Figur gezeigte Stirnzahnradgetriebestufe 12 erlaubt es, in einfacher Weise das Übersetzungs- bzw. Untersetzungsverhältnis des Abtriebsgetriebes 8 zu verändern, ohne dass der Achsabstand der Stirnzahnräder 13 und 14 und damit die entsprechenden Lagermittel 17 verändert werden müssten. Beispielsweise kann von einer Untersetzung auf eine Übersetzung gewechselt werden, indem ein kleineres Stirnzahnrad 13 durch ein größeres Stirnzahnrad und ein größeres Stirnzahnrad 14 durch ein kleineres Stirnzahnrad ersetzt wird.

Das Abtriebsgetriebe 8 kann motorseitig mit der Motorabtriebswelle 4 verbunden werden. Das Stirnzahnrad 14 kann hierzu mit der Motorabtriebswelle 4 drehfest verbunden werden, wenn der Getriebeaufsatz auf die Motoreinheit 2 aufgesetzt wird. Abtriebsseitig treibt das Stirnzahnrad 13 eine Getriebeausgangswelle 18 an, auf der das genannte Stirnzahnrad 13 sitzt und die aus der Gehäuseoberschale 16 stirnseitig heraustritt bzw. durch eine Ausgangsausnehmung 19 von außen her zugänglich ist, um mit dem Torbewegungselement gekoppelt zu werden.

Zwischen dem genannten Stirnzahnrad 13 und der Getriebeausgangswelle 18 ist eine Entriegelungskupplung vorgesehen, durch die die Getriebeausgangswelle 18 gegenüber der Motoreinheit 2 entriegelt werden kann. In der gezeichneten Ausführung ist das Kupplungselement der Entriegelungskupplung 20 in die Getriebeausgangswelle 18 bzw. das Stirnzahnrad 13 integriert. Wie die Figur zeigt, umfasst die Entriegelungskupplung 20 eine Passfeder 21, die in einer Passfederausnehmung 22 in der Getriebeausgangswelle 18 axial verschieblich, jedoch drehfest gelagert ist. An dem Stirnzahnrad 13 ist dabei ebenfalls eine Passfederausnehmung stirnseitig in der Innenausnehmung vorgesehen, so dass je nach Stellung der Passfeder 21 das Stirnzahnrad 13 mit der Getriebeausgangswelle 18 drehfest verriegelt ist oder gegenüber dieser freigegeben und damit drehbar ist. Die Passfeder 21 wird dabei von einer Federeinrichtung in Form einer Druckfeder 23 in ihre verriegelnde Stellung vorgespannt. Die genannte Druckfeder 23 ist in einer axialen Bohrung im Inneren der Getriebeausgangswelle 18 aufgenommen. Auf der gegenüberliegenden Seite der Druckfeder 23 sitzt in derselben axialen Bohrung in der Getriebeausgangswelle 18 ein Betätigungsstift 24, der stirnseitig aus der Getriebeausgangswelle 18 herausragt und durch eine Betätigungsausnehmung in der Gehäuseunterschale 15 auch aus dieser hervortritt bzw. von der Außenseite der Gehäuseunterschale 15 her betätigbar ist. Zur Betätigung des Betätigungsstiftes 24 und damit der Entriegelungskupplung 20 ist ein Entriegelungshebel 25 vorgesehen, der an dem Getriebegehäuse 11, insbesondere an der Gehäuseunterschale 15, gelagert ist. Der Entriegelungshebel 25 ist dabei zwischen einer Nicht-Eingriffsstellung und einer Eingriffsstellung verschwenkbar und/oder verschiebbar gelagert, wobei er in der letztgenannten Eingriffsstellung mit dem Betätigungsstift 24 in Eingriff steht und diesen in die Getriebeausgangswelle 18 hineindrückt, so dass die Passfeder 21 in ihre Nicht-Eingriffsstellung gedrückt wird.

Die Gehäuseunterschale 15 umfasst dabei vorteilhafterweise mehrere Lagermittel für den Entriegelungshebel 25, so dass dieser in verschiedenen Ausrichtungen auf der Außenseite der Gehäuseunterschale 15 montierbar ist.

Die Stellung des Entriegelungshebels 25 wird von einem Endschalter 26 überwacht, der an geeigneter Stelle fest an dem Getriebegehäuse 11 montiert ist. Wird der Entriegelungshebel 25 in seine Entriegelungsstellung bewegt, erfasst dies der Endschalter 26, der eine entsprechende Meldung an die Steuereinrichtung des Torantriebs geben kann, insbesondere die Stromversorgung für den gesamten Torantrieb 1, insbesondere die Motoreinheit 2, unterbrechen kann.

Weiterhin ist in den Antriebsaufsatz 7 eine Wegerfassungseinrichtung 27 integriert, die eine Impulsscheibe 28 aufweist, welche mit der Getriebeausgangswelle 18 derart gekoppelt ist, dass sie sich in vorbestimmter Weise entsprechend der Drehung der Getriebeausgangswelle 18 dreht. In der gezeichneten Ausführung sitzt die lmpulsscheibe 28 vorteilhafterweise unmittelbar drehfest auf der Getriebeausgangswelle 18. Durch die Kopplung der Impulsscheibe 28 mit der Getriebeausgangswelle 18 weiß die Wegerfassungseinrichtung 27 stets, insbesondere auch bei ausgekuppelter Entriegelungskupplung 20, in welcher Stellung sich die Getriebeausgangswelle 18 und damit das anzutreibende Tor befindet. Die Impulsscheibe 28 wirkt mit einem Impulsleser zusammen, der vorteilhafterweise ebenfalls im Inneren des Getriebegehäuses 11 des Antriebsaufsatzes 7 untergebracht ist. Die Wegerfassungseinrichtung 27 ist ebenso wie der Endschalter 26 in nicht gezeigter Weise mit der Steuereinrichtung des Torantriebs 1 verbunden.

Die Getriebeausgangswelle 18 besitzt stirnseitig mit ihrem aus der Gehäuseoberschale 16 heraustretenden Ende Kupplungsmittel zur Ankupplung an eine in der Figur nicht gezeigte Torwelle. Im Bereich des Austritts der Getriebeausgangswelle 18 aus dem Getriebegehäuse 11 ist an dem Getriebegehäuse 11 eine Dämpfungseinrichtung 29 befestigt, um Antriebsstöße abzufangen. Wie die Figur zeigt, umfasst die Dämpfungseinrichtung 29 ein Dämpfungselement 30, das grundsätzlich verschieden ausgebildet sein kann. In der gezeichneten Ausführung wird das Dämpfungselement 30 von einer Feder gebildet. Das Dämpfungselement 30 ist an einem Dämpfungselementeträger befestigt, der in der gezeichneten Ausführung als Dämpfungsblech 31 ausgebildet ist. Das Dämpfungsblech 31 sitzt im Bereich des Austritts der Getriebeausgangswelle 18 auf der Gehäuseoberschale 16 und besitzt selbst eine Ausnehmung 32, durch die hindurch sich die Getriebeausgangswelle 18 erstrecken kann. Das Dämpfungsblech 31 ist mittels einer Schraubverbindung 33 drehfest an dem Getriebegehäuse 11 befestigbar. Vorteilhafterweise sind die Bohrungen 34 in dem Dämpfungsblech 31 und/oder in der Gehäuseoberschale 16 derart ausgebildet bzw. verteilt, dass das Dämpfungsblech 31 in mehreren zueinander verdrehten Positionen an dem Getriebegehäuse 11 befestigbar ist.

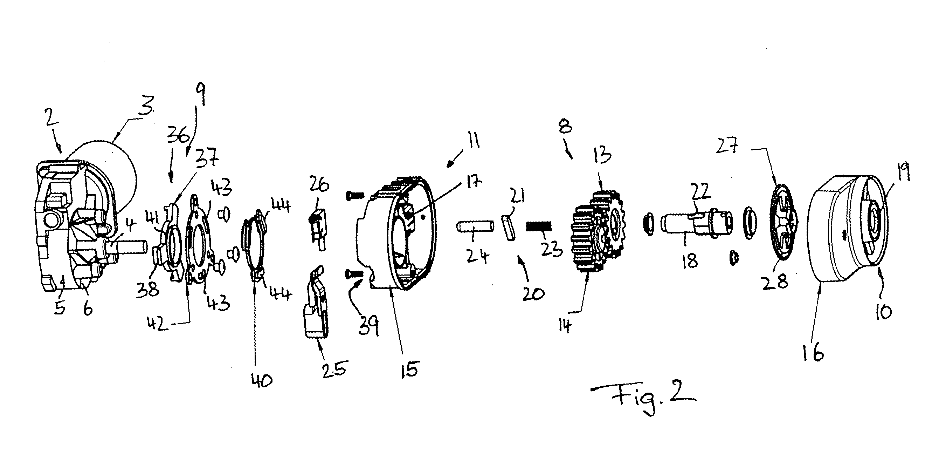

Figur 2 zeigt eine weitere vorteilhafte Ausführung eines Torantriebs, der in vielen Aspekten dem Torantrieb nach Figur 1 entspricht und entsprechende Bauteile besitzt, so dass für sich entsprechende Bauteile dieselben Bezugsziffern wie in Figur 1 verwendet sind und insoweit auf die vorangehende Beschreibung verwiesen wird. Im wesentlichen unterscheidet sich die Ausführung nach Figur 2 in der Ausbildung der Anschlussmittel des Antriebsaufsatzes 7 zur Befestigung an der Motoreinheit 2 sowie in einem motorseitig zwischen dem Antriebsaufsatz 7 und der Motoreinheit 2 angeordneten Dämpfungselement.

Insbesondere ist der Antriebsaufsatz 7, wie Figur 2 zeigt, durch eine Schnellverriegelungsvorrichtung 36 an der Motoreinheit 2 befestigbar. Die Schnellverriegelungsvorrichtung 36 umfasst dabei einen Bajonettverschluss 37, mittels dessen der Antriebsaufsatz 7 durch Kombination einer Axialbewegung im wesentlichen parallel zur Motorabtriebswelle 4 und einer Drehbewegung hierum an die Motoreinheit 2 formschlüssig ankuppelbar ist. Vorteilhafterweise ist dabei nur eine recht kleine Drehbewegung, beispielsweise um einen Drehwinkel von weniger als π, ausreichend.

Wie Figur 2 zeigt, umfasst der Bajonettverschluss 37 eine Drehverriegelungsplatte 41 mit radial auskragenden Eingriffsarmen bzw. -klauen 38, wobei die genannte Drehverriegelungsplatte 41 eine zentrale Ausnehmung aufweist, mittels derer sie über die Motorabtriebswelle 4 schiebbar ist. Die genannte Drehverriegelungsplatte 41 kann an der Motoreinheit 2, insbesondere dem Gehäuse 6 der Motoreinheit 2, drehbar gelagert werden, und zwar um eine Drehachse parallel, insbesondere koaxial zur Motorabtriebswelle 4. In der gezeichneten Ausführungsform ist die Drehverriegelungsplatte 41 durch eine Distanzplatte 42 an der Motoreinheit 2 fixierbar, die selbst an dem Gehäuse 6 der Motoreinheit 2 festschraubbar ist. Die Drehverriegelungsplatte 41 ist gegenüber der Distanzplatte 42 drehbar.

Andererseits umfasst der Bajonettverschluss 37 an der Gehäuseschale 15 des Antriebsaufsatzes 7 in der Zeichnung nicht näher dargestellte Eingriffsausnehmungen 39, die mit den vorgenannten Eingriffsklauen 38 der Drehverriegelungsplatte 41 zusammenwirken und an diese formangepasst sind. Zur Befestigung des Antriebsaufsatzes 7 wird dieser lediglich in axialer Richtung parallel zur Motorabtriebswelle 4 auf die Motoreinheit 2 gesetzt, wobei die Eingriffsklauen 38 in die Eingriffsausnehmungen 39 einfahren. Sodann kann eine Verriegelung lediglich durch eine Relativdrehung von Eingriffsklauen 38 und Eingriffsausnehmungen 39 bewirkt werden.

Wie Figur 2 weiterhin zeigt, sitzt dabei zwischen der Motoreinheit 2 und dem Antriebsaufsatz 7 das Dämpfungselement 40, das in der gezeichneten Ausführung in Form einer ringförmigen Dämpfungsscheibe ausgebildet ist, durch die hindurch sich die Motorabtriebswelle 4 erstreckt. Konkret sitzt das genannte Dämpfungselement 40 dabei in der gezeichneten Ausführung zwischen der vorgenannten fest mit der Motoreinheit 2 verbindbaren Distanzplatte 42 und der Gehäuseschale 15 des Antriebsaufsatzes 7. Wie Figur 2 zeigt, sind in der Distanzplatte 42 Dämpfungsausnehmungen 43 ausgebildet, in die Eingriffsvorsprünge 44 an dem Dämpfungselement 40 eingreifen, so dass das Dämpfungselement 40 formschlüssig an der Distanzplatte 42 gehalten ist. Die genannten Eingriffsvorsprünge 44 erstrecken sich dabei auch zu der Gehäuseschale 15 des Antriebsaufsatzes 7 hin, wo sie in ebenfalls ausgebildete Dämpfungsausnehmungen eingreifen. Über die genannten formschlüssigen Eingriffsmittel 44 ist das Dämpfungselement 40 sowohl radial als auch in Umfangsrichtung wirksam. Das Dämpfungselement 40 besteht dabei aus einem geeigneten stoß- und/oder vibrationsdämpfenden Material.

## Patentansprüche

1. Torantrieb für ein Garagen-, Garten-, Hallen- oder Industrietor, mit einer Motoreinheit (2), die einen Antriebsmotor (3) und eine Motorabtriebswelle (4) umfasst, einem Abtriebsgetriebe (8), das eingangsseitig mit der Motorabtriebswelle (4) verbindbar ist und ausgangsseitig eine Getriebeausgangswelle (18) zum Antreiben eines Torbewegungselements, insbesondere einer Torwelle, aufweist, einer Entriegelungskupplung (20) zum Entriegeln der Motorabtriebswelle (4) gegenüber dem Torbewegungselement, sowie zumindest einem Dämpfungselement (30, 31; 40) zur Dämpfung von Antriebsstößen, **dadurch gekennzeichnet, dass** das Abtriebsgetriebe (8) ein von der Motoreinheit (2) separat ausgebildetes Getriebegehäuse (11) aufweist und mit der Entriegelungskupplung (20) und dem Dämpfungselement (30, 31) zusammen modulartig einen separaten Antriebsaufsatz bildet, der einerseits an die Motoreinheit (2) und andererseits an das Torbewegungselement anschließbar ist.

2. Torantrieb nach dem vorhergehenden Anspruch, wobei eine Wegerfassungseinrichtung (27), vorzugsweise eine Impulsscheibe (28), zur Erfassung der Torstellung in den Antriebsaufsatz (7) integriert, insbesondere im Inneren des Getriebegehäuses (11) des Aufsatzgetriebes aufgenommen ist.

3. Torantrieb nach einem der vorhergehenden Ansprüche, wobei eine Entriegelungserfassungseinrichtung, insbesondere ein Endschalter (26), zur Erfassung der Entriegelungsstellung der Entriegelungskupplung (20) und/oder zur Abschaltung der Stromversorgung des Torantriebs bei Entriegelung des Torantriebs in den Antriebsaufsatz (7) integriert, insbesondere am Getriebegehäuse (11) des Aufsatzgetriebes befestigt ist.

4. Torantrieb nach einem der vorhergehenden Ansprüche, wobei die Motoreinheit (2) und der Antriebsaufsatz voneinander separat ausgebildete Gehäuse (6, 11) besitzen, die einerseits die Funktionsbausteine der Motoreinheit (2) und andererseits die Funktionsbausteine des Antriebsaufsatzes (7) aufnehmen.

5. Torantrieb nach einem der vorhergehenden Ansprüche, wobei zwei separate Getriebestufen vorgesehen sind, von denen die eine in die Motoreinheit (2) integriert ist und die andere in den Antriebsaufsatz (7) integriert ist, wobei vorzugsweise die beiden Getriebestufen (5; 13, 14) zueinander unterschiedlich ausgebildet sind.

6. Torantrieb nach einem der vorhergehenden Ansprüche, wobei das Getriebegehäuse (11) des Antriebsaufsatzes (7) aus zwei Halbschalen (15, 16) besteht, die aufeinandersetzbar sind und von denen die eine Anschlussmittel (9) zum Anschließen der Motoreinheit (2) und die andere Anschlussmittel (10) zur Abstützung der Antriebskraft aufweist.

7. Torantrieb nach einem der vorhergehenden Ansprüche, wobei der Antriebsaufsatz (7) motoranschlussseitig verschiedene und/oder variable Anschlussmittel (9) zum Anschluss an verschiedene Motoreinheiten und/oder zum Anschluss an eine Motoreinheit (2) in verschiedenen Positionen relativ hierzu aufweist.

8. Torantrieb nach einem der vorhergehenden Ansprüche, wobei zwischen der Motoreinheit (2) und dem Antriebsaufsatz (7) eine Schnellverriegelungsvorrichtung zur Verriegelung des Antriebsaufsatzes (7) an der Motoreinheit (2) vorgesehen ist.

9. Torantrieb nach dem vorhergehenden Anspruch, wobei die Schnellverriegelungsvorrichtung (36) an der Motoreinheit (2) vorgesehene Eingriffsmittel (28) und daran angepasste, an dem Antriebsaufsatz (7) vorgesehene Eingriffsmittel (29) aufweist, die durch Verdrehen relativ zueinander in formschlüssigen Eingriff bringbar sind.

10. Torantrieb nach dem vorhergehenden Anspruch, wobei die Eingriffsmittel (28, 29) um eine zur Motorabtriebswelle (4) parallele Drehachse drehbar und verriegelbar sind.

11. Torantrieb nach einem der drei vorhergehenden Ansprüche, wobei die Schnellverriegelungsvorrichtung (36) einen Bajonettverschluss (37) aufweist.

12. Torantrieb nach einem der vorhergehenden Ansprüche, wobei der Antriebsaufsatz (7) abtriebsseitig verschiedene und/oder variable Anschlussmittel zum Anschluss an verschiedene Torbewegungselemente und/oder zum Anschluss an ein Torbewegungselement in verschiedenen Ausrichtungen hierzu aufweist.

13. Torantrieb nach einem der vorhergehenden Ansprüche, wobei das Abtriebsgetriebe (8) eine auswechselbare Getriebestufe (12) aufweist, die durch eine Getriebestufe mit abweichendem Über- oder Untersetzungsverhältnis ersetzbar ist.

14. Torantrieb nach dem vorhergehenden Anspruch, wobei die Getriebestufe (12) ein Stirnradpaar (13, 14) umfasst.

15. Torantrieb nach dem vorhergehenden Anspruch, wobei das Stirnradpaar (13, 14) über Lagermittel (17) an derselben Getriebegehäuseschale (15) abgestützt ist.

16. Torantrieb nach einem der vorhergehenden Ansprüche, wobei das zumindest eine Dämpfungselement (30) an einem Dämpfungselementeträger (31) angeordnet ist, der lösbar mit dem Getriebegehäuse (11) des Antriebsaufsatzes (7) verbindbar, vorzugsweise an einer Außenseite des Getriebegehäuses (11) befestigbar ist.

17. Torantrieb nach dem vorhergehenden Anspruch, wobei der Dämpfungselementeträger aus einem Dämpfungsblech (31) besteht, das stirnseitig im Bereich des Austritts der Getriebeausgangswelle (18) aus dem Getriebegehäuse (11) an dem genannten Getriebegehäuse (11) lösbar befestigt ist und eine radial von der Getriebeausgangswelle (18) beabstandete Dämpfungselementeaufnahme (35) besitzt.

18. Torantrieb nach einem der vorhergehenden Ansprüche, wobei der Dämpfungselementeträger (31) und/oder das Getriebegehäuse (11) verschiedene und/oder variable Anschlussmittel (33) zum Anschluss des Dämpfungselementeträgers (31) an das Getriebegehäuse (11) in mehreren Stellungen aufweist.

19. Torantrieb nach einem der vorhergehenden Ansprüche, wobei das zumindest eine oder ein weiteres Dämpfungselement (40) zwischen dem Antriebsaufsatz (7) und der Motoreinheit (2) vorgesehen ist.

20. Torantrieb nach dem vorhergehenden Anspruch, wobei das genannte Dämpfungselement (40) durch die Schnellverriegelungsvorrichtung (36) zwischen dem Antriebsaufsatz (7) und der Motoreinheit (2) befestigbar ist.

21. Torantrieb nach einem der beiden vorhergehenden Ansprüche, wobei das genannte Dämpfungselement (40) formschlüssige Verbindungsmittel zur formschlüssigen Verbindung mit der Motoreinheit (2) und/oder mit dem Antriebsaufsatz (7) aufweist.

22. Torantrieb nach einem der vorhergehenden Ansprüche, wobei das genannte Dämpfungselement (40) bezogen auf die Motorabtriebswelle (4) der Motoreinheit (2) radial wirksame und/oder in Umfangsrichtung um die Motorabtriebswelle (4) wirksame Dämpfungsmittel aufweist.

23. Torantrieb nach einem der vorhergehenden Ansprüche, wobei das genannte Dämpfungselement (40) eine ringförmige Dämpfungsscheibe bildet, durch die hindurch sich die Motorabtriebswelle (4) erstreckt.

24. Torantrieb nach einem der vorhergehenden Ansprüche, wobei die Entriegelungskupplung (20) zwischen der Getriebeausgangswelle (18) und einem im Getriebegehäuse (11) aufgenommenen Getrieberad (13) des Abtriebsgetriebes (8) angeordnet ist.

25. Torantrieb nach einem der vorhergehenden Ansprüche, wobei die Entriegelungskupplung (20) einen in der Getriebeausgangswelle (18) zumindest teilweise verschieblich aufgenommenen Betätigungsstift (24) aufweist, der von einem auf der Getriebegehäuseaußenseite angeordneten Betätiger (25) betätigbar ist.

26. Torantrieb nach einem der vorhergehenden Ansprüche, wobei die Motoreinheit (2) eine Getriebestufe (5), vorzugsweise ein Schneckengetriebe oder ein Kegelstirnradgetriebe, aufweist, die eine Elektromotorwelle mit der Motorabtriebswelle (4) verbindet.
